# EUROPÄISCHE PATENTSCHRIFT

(11) **EP 1 917 895 B1**
(45) Veröffentlichungstag und Bekanntmachung des Hinweises auf die Patenterteilung: **09.03.2011**
(21) Anmeldenummer: 06022951.5
(22) Anmeldetag: 03.11.2006
(51) Int. Cl.: A47L 9/10, B01D 39/16, A47L 9/14, A47L 9/16

(54) **Antibakterieller Staubsaugerfilterbeutel**
Antibacterial Vacuum Cleaner Filter Bag
Sac à Poussières d'Aspirateur Antibactériel

(43) Veröffentlichungstag der Anmeldung: 07.05.2008
(73) Patentinhaber: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker, Kinkeldey, Stockmair & Schwanhäusser Anwaltssozietät

(56) Entgegenhaltungen:
- EP-A- 1 310 288
- EP-A- 1 674 011
- WO-A-00/06210
- WO-A-00/71789
- WO-A-97/02077
- WO-A-2005/082219
- DE-A1- 10 127 513
- DE-U1- 20 023 762
- DE-U1- 20 308 543
- DE-U1-202005 009 452
- DE-U1-202005 012 846
- FR-A- 2 417 287
- GB-A- 2 292 883
- JP-A- 7 124 079
- JP-A- 2001 348 764
- JP-A- 2005 161 308
- US-A- 5 040 264
- US-A1- 2002 043 493
- US-A1- 2006 144 403

## Beschreibung

Die Erfindung betrifft einen Staubsaugerfilterbeutel mit insbesondere verbesserten hygienischen Eigenschaften.

Bei der Herstellung von Staubsaugerfilterbeuteln, die in einen Staubsauger eingesetzt werden und den eingesaugten Staub halten sollen, besteht einer der Entwicklungsschwerpunkte darin, die Staubspeicherfähigkeit und die Standzeit zu erhöhen. Hierfür gibt es verschiedene Ansätze, die die Filterstruktur, d. h. den Aufbau der Filtermateriallagen der Beutelwand, und/oder die Parameter einzelner Lagen selbst betreffen.

So zeigt die EP 0 960 645 einen mehrlagigen Filteraufbau, bei dem in Strömungsrichtung eine Grobfilterlage vor einer Feinfilterlage angeordnet ist. In der Grobfilterlage sollen insbesondere größere Mengen an Staub eingelagert werden, was ein schnelles Verstopfen der gesamten Filterstruktur verhindert.

Eine weitere Möglichkeit wird in der WO 2005/060807 beschrieben, wonach ein Staubsaugerfilterbeutel ein unter einer gegebenen Luftströmung aufwirbelbares Material enthält.

Aus der DE 10 2006 016 009 ist ein Staubsaugerfilterbeutel mit einer Ablenkeinrichtung bekannt, wodurch ebenfalls die Standzeit signifikant erhöht werden kann.

Ein anderer Schwerpunkt bei der Weiterentwicklung von Staubsaugerfilterbeuteln besteht darin, die Entstehung unangenehmer Gerüche und/oder Bakterienwachstum aus hygienischen Gründen zu unterdrücken. In diesem Zusammenhang beschreibt die DE 20 2005 009 452 U einen Staubsaugerbeutel innerhalb dessen unter anderem ein Biozid angeordnet ist. Hierfür werden insbesondere Pflanzenteile + Pulver von z.B. Kamille, Thymian oder Oregano erwähnt. Ganze Pflanzenteile sind naturgemäß nicht faserförmig und lassen sich nicht zu Vliesstoffen verarbeiten. In Pflanzenteilen sind neben den aktiven Komponenten auch noch hohe Anteile an Gerüststoffen enthalten, die eine Wirksamkeit herabsetzen (Verdünnungseffekt).

Aus der DE 20 2005 012846 U ist ein antimikrobieller Zusatz für einen Staubsaugerbeutel bekannt. Der antimikrobielle Zusatz umfasst einen Wirkstoffträger, beispielsweise Zellstoff, und einen antimikrobiellen Wirkstoff, wobei der Wirkstoffträger mit dem Wirkstoff getränkt ist.

Die WO 00/06210 zeigt ein Verfahren zur Herstellung von antimikrobiellen Artikeln. Verschiedene Substrate, beispielsweise natürliche oder synthetische Fasern, werden insbesondere mit einem chitosanbasierten antimikrobiellen Komplex behandelt.

Die JP 2001 348764 beschreibt einen Vliesstoff, an den ein Pulver der Rinde verschiedener Bäume zu antimikrobiellen Zwecken gebunden ist.

Eine Halteplatte eines Staubsaugers ist aus der DE 203 08 543 U bekannt.

Aus der DE 29 11 004 ist ein Filterbeutel bekannt, der an seiner Innenseite eine Beschichtung mit einem Vlies aufweist, das mit antimykotischen oder antibakteriellen Mitteln versehen ist. Als antibakterielle und antimykotische Mittel werden dabei verschiedene synthetische Substanzen verwendet.

Der Nachteil eines derartigen Filterbeutels besteht darin, dass die Verwendung synthetischer Bakterizide und Fungizide ökologisch und ökonomisch problematisch ist. Die Wirkstoffe sind teuer und verursachen häufig allergische Reaktionen. Die Fertigungsprozesse der Filterbeutel wird weiterhin durch die zusätzliche Lage komplizierter, und auch die Filtercharakteristik des Filterbeutels verändert sich unvorhersehbar, da insbesondere die öligen Biozide die Eigenschaften der nachfolgenden Filterschichten beeinflussen können. So wird beispielsweise die Persistenz einer elektrostatischen Aufladung eines Vliesstoffes durch Kontakt mit öligen Substanzen verringert.

Die Aufgabe der vorliegenden Erfindung besteht somit darin, die oben genannten Nachteile des Stands der Technik zu überwinden und einen Staubsaugerfilterbeutel mit verbesserter Hygiene bereitzustellen, der sich in einfacher Weise herstellen lässt.

Diese Aufgabe wird gelöst durch einen Staubsaugerfilterbeutel gemäß Patentanspruch 1.

Erfindungsgemäß wird ein Staubsaugerfilterbeutel mit einer Beutelwand aus Filtermaterial bereitgestellt, wobei in der Beutelwand und/oder im Innern des Staubsaugerfilterbeutels Fasern aus einem Biopolymer mit antibakterieller Wirkung vorgesehen sind.

Unter Biopolymeren werden Makromoleküle verstanden, die in lebenden (insbesondere pflanzlichen oder tierischen) Organismen vorkommen oder von diesen hergestellt werden. Beispiele für Biopolymere sind Proteine, Peptide, Polysaccharide, wie Zellulose, oder Polyaminosaccharide, wie Chitosan.

Die Fasern können Chemiefasern aus natürlichen Polymeren oder Naturfasern (insbesondere pflanzliche Fasern) sein. Diese Begriffe werden hier und im folgenden gemäß W. Albrecht et al., "Vliesstoffe", Wiley-VCH, 2000, verwendet.

Chemiefasern aus natürlichen Polymeren werden insbesondere durch Regenerierung aus Lösungen erhalten; so werden zellulosische Chemiefasern (Zellulosefasern) durch Regenerierung aus Lösungen von Zellulose oder Zellulosederivaten erhalten. Chemiefasern können in Form von Stapelfasern oder von Endlosfasern (Filamenten) ausgebildet sein.

Naturfasern umfassen pflanzliche und tierische Fasern, die keinen Regenerierungsschritt durchlaufen. Mögliche Naturfasern sind beispielsweise Zellstofffasern, die in Zellstoff aus Nadelholz oder Bambus auftreten. Wenn im Folgenden von Zellstofffasern die Rede ist (beispielsweise Bambuszellstofffasern), so sind damit Naturfasern gemeint. Der Begriff Stapelfasern bezeichnet hingegen eine Form von Chemiefasern; Bambusstapelfasern werden beispielsweise durch Regenerierung von Zellulosefasern aus Lösungen von Bambuszellulose oder -zellulosederivaten erhalten.

Somit kann insbesondere die Beutelwand und/oder das Innere des Staubsaugerfilterbeutels beispielsweise Stapelfasern enthalten, die ein Biopolymer mit antibakterieller Wirkung umfassen.

In der Beutelwandung und/oder im Innern des Staubsaugerfilterbeutels kann ein aus einem Biopolymer hergestelltes Pulver mit antibakterieller und/oder fungizider Wirkung vorgesehen sein.

Im Folgenden wird manchmal statt des Ausdrucks "ein Biopolymer umfassende Fasern mit antibakterieller Wirkung" der Ausdruck "antibakterielle Fasern" synonym verwendet. In gleicher Weise wird manchmal von "antibakteriellem Pulver" gesprochen.

Im Falle von antibakteriellen Chemiefasern können diese aus Biopolymeren, beispielsweise zellulosische Chemiefasern, sein; diese Chemiefasern werden somit aus einem Biopolymer hergestellt. Sie lassen sich beispielsweise in Form von Spinnfasern, wie Viskosespinnfasern, oder Extrusionsfasem herstellen.

Eine antibakterielle Wirkung umfasst bakteriostatische (keimhemmende) und/oder bakterizide (keimabtötende) Wirkungen.

Aufgrund des faser- oder pulverförmigen Biopolymers lässt sich ein derartiger Staubsaugerfilterbeutel in ökologisch unbedenklicher und einfacher Weise herstellen. Antibakterielle Stapelfasern können beispielsweise Nadelholzzellulosefasern ersetzen, die in einem Vliesstoff aus filtertechnischen Gründen vorhanden waren (beispielsweise die Zellulosefasern in einer Hochkapazitäts-Airlaidlage in der EP 0 960 645) und zusätzlich die antibakterielle Ausrüstung des Filterbeutels übernehmen. Somit wird auf ökonomische und ökologische Weise der gewünschte Effekt erzielt.

Weiterhin stellt auch die Entsorgung aufgrund der biologischen Abbaubarkeit von Biopolymeren kein Problem dar. Darüber hinaus sind Biopolymere auch nicht toxisch, so dass ein Aufplatzen oder die Entsorgung eines Staubsaugerfilterbeutels, bei dem gegebenenfalls ein Teil des Biopolymermaterials austreten kann, keine Gefahr darstellt. Einige Biopolymere haben außerdem den Vorteil, dass sie neben einer antibakteriellen Wirkung auch eine fungizide und/oder antivirale Wirkung zeigen. Da einzelne Fasern, also nicht ganze Pflanzenteile, eingesetzt werden, lassen sich Filtermedien nach den herkömmlichen Vlieslegeverfahren herstellen. Stapelfasern in unterschiedlichen Längen und Titern sind am Markt erhältlich (beispielsweise von SWICOFIL AG Textile Services, Schweiz).

Ein Staubsaugerfilterbeutel umfasst üblicherweise eine Beutelwandung aus einem Filtermaterial, d. h. aus einem Material, das luftdurchlässig ist. Durch diese Beutelwandung wird der Hohlraum begrenzt, in den ein Staubpartikel führender Luftstrom geleitet wird. Hierfür weist die Beutelwandung eine Eintrittsöffnung auf, in deren Umgebung häufig auch eine Halteplatte an der Außenseite der Beutelwandung befestigt ist, um mit dieser den Staubsaugerfilterbeutel in einem Staubsauger zu fixieren.

Das Biopolymer der antibakteriellen Fasern bzw. des Pulvers kann Chitosan und/oder Zellulose aus Bambus sein.

Beide Materialien haben den Vorteil, dass sich aus ihnen insbesondere Fasern mit antibakteriellen Eigenschaften in einfacher Weise herstellen lassen. Wird Zellulose aus Bambus gewonnen, so ist an dem Zellulosepolymer der antibakterielle Wirkstoff "Bamboo Kun" gebunden. Dieser Wirkstoff ist so fest an die Zellulosepolymere gebunden, dass die antibakterielle Wirkung sogar bei der Weiterverarbeitung zu Stapelfasern oder Textilien und mehrmaligem Waschen erhalten bleibt.

Chitosanpulver kann aufgrund seiner positiven Ladung in vorteilhafter Weise elektrostatisch an elektrostatisch geladene Fasern gebunden werden. Außerdem hat insbesondere Chitosan auch eine fungizide und antivirale Wirkung. Chitosan kann verschiedene Kettenlängen aufweisen, die je nach Bedarf, beispielsweise um eine wasserlösliche Form zu erhalten, gewählt werden. Die Löslichkeit von Chitosan in diversen Lösungsmitteln erlaubt zudem die Verarbeitung im so genannten elektrostatischen Spinnvliesverfahren (siehe W. Albrecht et al., Vliesstoffe, Wiley-VCH, 2000) oder das Vernebeln einer wässrigen Chitosanlösung.

Es wird darauf hingewiesen, dass das Biopolymer auch einen anderen Ursprung als Bambus oder Chitosan haben kann, solange das resultierende Pulver eine antibakterielle oder fungizide Wirkung hat.

Bei den zuvor beschriebenen Staubsaugerfilterbeuteln sind die antibakteriellen Fasern in Form von Bambuszellstofffasern, Bambusstapelfasern und/oder Chitosanfasem ausgebildet.

Bambuszellstofffasern sind pflanzliche Fasern und können insbesondere aus Bambuszellstoff ("bamboo pulp") mittels einer Hammermühle oder Dispergierens im Wasser (und anschließender Weiterverarbeitung im Nasslegeverfahren) hergestellt werden. Bambusstapelfasern sind zellulosische Chemiefasern und lassen sich, analog zum Fall von Nadelholzzellulose, aus Lösungen von Zellulose oder Zellulosederivaten spinnen, beispielsweise mittels eines Viskoseverfahrens. Ein mögliches Herstellungsverfahren ist beispielsweise in der JP 2005-126871 beschrieben. Bei den Chitosanfasem kann es sich insbesondere um gesponnene, beispielsweise elektrostatisch oder nach dem Viskoseverfahren gesponnene, Chitosanfasem handeln. Viskose- und Elektrostatik-Spinnvliesverfahren sind beispielsweise in W. Albrecht et al., Vliesstoffe, Wiley-VCH, 2000 beschrieben. Die Chitosanfasem können als Stapelfasern oder als Endlosfasern ausgebildet sein.

Bei obigen Staubsaugerfilterbeuteln kann das Pulver Bambuszellstoffpulver und/oder Chitosanpulver sein. Ersteres kann beispielsweise durch Mahlen von Bambuszellstoff erhalten werden.

Die Beutelwandung der zuvor genannten Staubsaugerfilterbeutel kann wenigstens eine Filtermateriallage aufweisen, welche die antibakteriellen Fasern umfasst.

Die Beutelwandung eines Staubsaugerfilterbeutels kann grundsätzlich eine oder mehrere Filtermateriallagen umfassen. Durch den Einsatz von antibakteriellen Biopolymerfasern in einer Filtermateriallage wird erreicht, dass deren Wirkung insbesondere auf in die Beutelwand eindringende Bakterien ausgeübt wird. Ein weiterer Vorteil besteht darin, dass die antibakteriellen Fasern selbst bei einem Aufplatzen des Staubsaugerfilterbeutels nicht oder nur in sehr geringem Umfang freigesetzt würden.

Die wenigstens eine Filtermateriallage kann die antibakteriellen Fasern in mehr als 5 Gew.-%, insbesondere mehr als 10 Gew.-%, insbesondere mehr als 20 Gew.-%, umfassen. Mit einem derartigen Anteil an antibakteriellen Fasern in der wenigstens einen Filtermateriallage wird eine vorteilhafte antibakterielle Wirkung erzielt. Wenn die Fasern mit antibakterieller Wirkung nicht 100 Gew.-% der Filtermateriallage ausmachen, können die restlichen Fasern Natur- und/oder Chemiefasern sein.

Die wenigstens eine Filtermateriallage kann in Luftströmungsrichtung am weitesten stromaufwärts, am weitesten stromabwärts und/oder zwischen zwei weiteren Filtermateriallagen angeordnet sein.

Je nach bevorzugter Anwendung kann somit die wenigstens eine Filtermateriallage entsprechend positioniert sein. Bei einer am weitesten stromaufwärts angeordneten Positionierung bildet die wenigstens eine Filtermateriallage somit die Innenlage des Staubsaugerfilterbeutels.

Die Beutelwandung der zuvor beschriebenen Staubsaugerfilterbeutel kann wenigstens zwei weitere Filtermateriallagen umfassen, zwischen denen die antibakteriellen Fasern angeordnet sind. In diesem Fall können die antibakteriellen Fasern insbesondere lose, also insbesondere nicht gebunden, zwischen den zwei weiteren Filtermateriallagen vorgesehen sein.

Beispielsweise kann bei der Herstellung der Filterstruktur eine erste der zwei weiteren Filtermateriallagen bereitgestellt werden, auf die dann das Material umfassend das Biopolymer in loser Form (z.B. als lose Stapelfasern) aufgebracht wird. Anschließend kann die zweite der zwei weiteren Filtermateriallagen aufgebracht werden. Danach können die zwei weiteren Filtermateriallagen mit dem dazwischen angeordneten Material miteinander verbunden werden. Damit ist eine besonders einfache Herstellung des Staubsaugerfilterbeutels möglich.

Die antibakteriellen Fasern können mit wenigstens einer der zwei weiteren Filtermateriallagen, insbesondere mechanisch, chemisch und/oder thermisch verbunden sein.

Bei den zuvor beschriebenen Staubsaugerfilterbeuteln sind die wenigstens eine Filtermateriallage und/oder wenigstens eine der zwei weiteren Filtermateriallagen eine trockengelegte Vliesstofflage, insbesondere eine kardierte oder luftgelegte Vliesstofflage, eine nassgelegte Vliesstofflage oder eine Extrusionsvliesstofflage, insbesondere eine Meltblownlage, eine Spunbondlage oder eine elektrostatisch gesponnene Vliesstofflage.

Der Begriff Vliesstoff ("Nonwoven") wird gemäß der Definition nach ISO-Standard ISO 9092: 1988 bzw. CEN-Standard EN 29092 verwendet. Ein Vliesstoff kann insbesondere trocken- oder nassgelegt oder ein Extrusionsvliesstoff, insbesondere ein Meltblown (schmelzgesponnener Mikrofaservliesstoff) oder Spunbond (Filamentspinnvliesstoff), sein. Die Abgrenzung zwischen nassgelegten Vliesstoffen bzw. Nonwoven und herkömmlichem nassgelegten Papier erfolgt gemäß der oben genannten Definition, wie sie auch von der International Association Serving the Nonwovens and Related Industries EDANA (www.edana.org) verwendet wird. Wenn also hier von Papier oder Filterpapier die Rede ist, ist damit (herkömmliches) nassgelegtes Papier gemeint, das in der oben genannten Definition von Vliesstoff ausgenommen ist.

Eine trockengelegte oder nassgelegte Vliesstofflage umfasst Bambuszellstofffasern Bambusstapelfasern und/oder Chitosanstapelfasem . Neben diesen Fasern kann eine derartige Vliesstofflage noch weitere Zellstofffasern und/oder Stapelfasern umfassen. Umfasst eine nassgelegte Vliesstofflage Chitosanstapelfasern, so umfasst sie noch Zellstofffasern und/oder Zellulosestapelfasern (beispielsweise gewonnen aus Nadelholz), um die Bildung von Wasserstoffbrücken zu ermöglichen.

Insbesondere können die oben beschriebenen Staubsaugerfilterbeutel wenigstens eine trockengelegte oder nassgelegte Vliesstofflage aufweisen, die Bambusstapelfasern, Bambuszellstofffasern und/oder Chitosanfasern, insbesondere mit einem Anteil von mehr als 5 Gew.-% bis zu 100 Gew.-% enthält. Eine entsprechende trockengelegte Vliesstofflage kann insbesondere kardiert oder luftgelegt sein.

Die Spunbondlage (Lage aus Filamentspinnvlies) kann insbesondere mittels eines thermischen Prägekalanders verfestigt sein. Die Spunbondlage kann als Mikrodenier-Spunbondlage ausgebildet sein. Derartige Spunbondlagen, wie sie beispielsweise in der EP 0 960 645 beschrieben sind, weisen vorzugsweise einen mittleren Faserdurchmesser von weniger als 12 µm auf

Zusätzlich zur Verwendung von antibakteriellen Fasern aus einem Biopolymer kann die Filtermateriallage eine der oben genannten Vliesstofflagen oder eine Filterpapierlage sein, wobei wenigstens ein Teil der Fasern, insbesondere alle Fasern, mit einem Biopolymer mit antibakterieller Wirkung beschichtet ist bzw. sind. Hierfür kann beispielsweise eine Vliesstofflage mit Wasser, in dem Chitosan geeigneter Kettenlänge gelöst ist, besprüht und anschließend getrocknet werden; gemäß einem weiteren Beispiel kann bei einem Extrusionsvliesstoff, insbesondere einem Meltblown, das Polymer beim Austritt aus der Spinndüse mit einem Wassernebel abgeschreckt werden, in dem Chitosan gelöst ist, so dass eine Beschichtung der Fasern mit Chitosan erhalten wird.

Bei beschichteten Faser können die Fasern Natur- und/oder Chemiefasern sein. Bei den Fasern kann es sich sowohl um Stapelfasern als auch um Endlosfasern handeln. Möglich sind beispielsweise Zellstofffasern und/oder Fasern umfassend ein oder mehrere Polyolefine, wie Polyethylen (PE) oder Polypropylen (PP). Bei der Bindung an Polyolefine kann es vorteilhaft sein, die Filamente oder die Stapelfasern vor der Beschichtung elektrostatisch aufzuladen. Dies kann durch triboelektrische Aufladung (im Falle von Stapelfasern) oder Coronaladung (im Falle eines Extrusionsvliesstoffes) erfolgen.

Die wenigstens eine Filtermateriallage und/oder wenigstens eine der zwei weiteren Filtermateriallagen können stromaufwärts, insbesondere unmittelbar stromaufwärts, einer Filterpapierlage, einer trockengelegten Vliesstofflage, insbesondere einer kardierten oder luftgelegten Vliesstofflage, einer nassgelegten Vliesstofflage oder einer Extrusionsvliesstofflage, insbesondere einer Meltblownlage, einer Spunbondlage oder einer elektrostatisch gesponnenen Vliesstofflage, angeordnet sein.

Auch hier und im Folgenden beziehen sich die Begriffe "stromaufwärts" und "stromabwärts" auf die Luftströmungsrichtung während des Betriebs des Staubsaugerfilterbeutels. Die dem Inneren des Staubsaugerfilterbeutels zugewandte Filtermateriallage ist somit die am weitesten stromaufwärts angeordnete Lage. Eine Lage ist unmittelbar stromaufwärts einer anderen Lage angeordnet, wenn zwischen den beiden Lagen kein weiteres Filtermaterial angeordnet ist; zwischen den beiden Lagen kann sich beispielsweise nur noch ein Klebstoff befinden.

Alternativ oder zusätzlich können die wenigstens eine Filtermateriallage und/oder wenigstens eine der zwei weiteren Filtermateriallagen stromabwärts, insbesondere unmittelbar stromabwärts, einer Filterpapierlage, einer trockengelegten Vliesstofflage, insbesondere einer kardierten oder luftgelegten Vliesstofflage, einer nassgelegten Vliesstofflage oder einer Extrusionsvliesstofflage, insbesondere einer Meltblownlage, einer Spunbondlage oder einer elektrostatisch gesponnenen Vliesstofflage, angeordnet sein.

Mögliche Filterstrukturen bzw. Aufbauten der Beutelwandung sind beispielsweise in der EP 0 960 645 beschrieben. Bezug nehmend auf dieses Patent können beispielsweise die dort genannten Hochkapazitätslagen, Feinfilterlagen und/oder Stützlagen antibakterielle Fasern umfassen. Alternativ oder zusätzlich kann auch in Strömungsrichtung vor und/oder nach einer dieser Lagen eine Filtermateriallage mit den antibakterielle Fasern vorgesehen sein.

Die wenigstens eine Filtermateriallage der beschriebenen Staubsaugerfilterbeutel kann thermisch, mechanisch und/oder chemisch verfestigt sein.

Bei den zuvor angegebenen Staubsaugerfilterbeuteln kann die wenigstens eine Filtermateriallage die Fläche der Beutelwandung nur teilweise oder vollständig überdecken. Bei einer nur teilweisen Überdeckung kann die wenigstens eine Filtermateriallage insbesondere in einem Bereich angeordnet sein, in dem ein in den Staubsaugerfilterbeutel eintretender Luftstrom auf der Innenseite der Beutelwandung auftrifft.

Die antibakterielle Fasern und/oder das antibakterielle Pulver können das Biopolymer mit einem Anteil von wenigstens 5 Gew.-%, insbesondere wenigstens 10 Gew.-%, insbesondere wenigstens 20 Gew.-%, aufweisen. Die antibakterielle Fasern können beispielsweise in Form von Zellstofffasern oder Endlosfasern ausgebildet sein. Die Endlosfasern können, insbesondere im Fall von elektrostatisch gesponnenen Fasern, einen mittleren Faserdurchmesser von weniger als 1 µm, vorzugsweise weniger als 0,5 µm, aufweisen.

Alternativ können die antibakterielle Fasern in Form von Stapelfasern ausgebildet sein. Dabei können die Stapelfasern einen Titer von 1 - 10 dtex, insbesondere 1 - 6 dtex, und/oder eine mittlere Faserlänge von 20 bis 200 mm, insbesondere von 30 bis 80 mm, aufweisen.

Das antibakterielle Pulver kann insbesondere an Fasern gebunden sein. Die Fasern können Natur- und/oder Chemiefasern sein. Bei den Fasern kann es sich sowohl um Stapelfasern als auch um Endlosfasern handeln. Möglich sind beispielsweise Zellulosefasern und/oder Fasern umfassend ein oder mehrere Polyolefine, wie Polyethylen (PE) oder Polypropylen (PP). Die Fasern können insbesondere elektrostatisch geladene Spaltfasern sein. Das Biopolymer kann elektrostatisch an die Fasern gebunden sein.

Weiterhin kann ein Staubsaugerfilterbeutel, wie zuvor beschrieben, mit einer ein Biopolymer umfassenden Halteplatte mit antibakterieller Wirkung versehen sein. Dies ermöglicht eine hygienische Entnahme des Staubsaugerfilterbeutels nach dessen Gebrauch aus einem Staubsauger.

Das Biopolymer kann in die Halteplatte eingearbeitet und/oder an der Oberfläche gebunden sein. Beispielsweise kann das Material der Halteplatte Chitosanpulver enthalten.

Bei den zuvor beschriebenen Staubsaugerfilterbeuteln kann die Halteplatte einen Kunststoff umfassen. In den Kunststoff kann beispielsweise Chitosanpulver eingearbeitet sein. Bei einer Spritzgusshalteplatte kann dies nach allen übliche Verfahren erreicht werden, mit denen beispielsweise auch Glasfasern oder Talkum in Spritzgussteile eingearbeitet wird.

Bei einem Staubsauger mit einem Staubsammelraum zur Aufnahme eines Staubsaugerfilterbeutels kann die Wandung des Staubsammelraums wenigstens teilweise ein ein Biopolymer umfassendes Material mit antibakterieller Wirkung umfassen.

Unter dem Staubsammelraum wird der Hohlraum in einem Staubsaugergehäuse verstanden, in den der Staubsaugerfilterbeutel für den Betrieb eingesetzt oder in dem der Staub, im Falle eines Staubsaugers, der beispielsweise nach dem Zyklotronprinzip arbeitet, abgeschieden wird.

Der Staubsauger kann alternativ oder zusätzlich ein Saugrohr und/oder einen Verbindungskanal zwischen Saugrohr und Staubsaugerraum aufweisen, wobei die Wandung des Saugrohrs und/oder des Verbindungskanals wenigstens teilweise ein ein Biopolymer umfassendes Material mit antibakterieller Wirkung umfasst.

Das Material, das die Wandung umfasst, kann insbesondere ein Kunststoff sein. Das Biopolymer, insbesondere Chitosanpulver, kann in die Wandung eingearbeitet und/oder an der Oberfläche gebunden sein.

Ein nicht unter die Erfindung fallendes Verfahren zur Herstellung einer Filtermateriallage für einen Staubsaugerfilterbeutel kann die Schritte umfassen:
Extrudieren von Polymermaterial durch eine Mehrzahl von Spinndüsen,
Abschrecken des extrudierten Polymermaterials mit einem Wassernebel, wobei der Wassernebel ein Biopolymer enthält,
Ablegen des abgeschreckten Polymermaterials, um eine Vliesstofflage zu bilden.

Dies ermöglicht in einfacher Weise eine antibakterielle Beschichtung von Chemiefasern.

Der Schritt des Extrudierens kann insbesondere ein Extrudieren gemäß dem Meltblownverfahren umfassen.

Dabei kann es sich insbesondere um ein Verfahren zur Herstellung einer Meltblownlage handeln. Das Biopolymer kann insbesondere Chitosan sein, das insbesondere im Wasser gelöst sein kann. Der Wassernebel zum Abschrecken (Quenchen) weist vorzugsweise eine mittlere Tröpfchengröße von 1 bis 10 µm auf. Da der Wassernebel zum Abschrecken dient, also auf das noch heiße extrudierte Polymer gesprüht wird, wird letzteres nahe der Spinndüse angesprüht. Das Polymer kann beispielsweise Polyethylen oder Polypropylen sein.

Weitere Merkmale und Vorteile der Erfindung werden nachfolgend anhand von Beispielen und der Figuren erläutert. Dabei zeigt schematisch:
- Fig. 1: einen Querschnitt durch ein Beispiel eines erfindungsgemäßen Staubsaugerfilterbeutels;
- Fig. 2 bis 6: den Aufbau von Beispielen einer Filterstruktur eines Staubsaugerfilterbeutels, wie beispielsweise in Fig. 1 gezeigt, in Querschnittsansicht;
- Fig. 7: ein weiteres Beispiel eines Staubsaugerfilterbeutels in Querschnittsansicht.

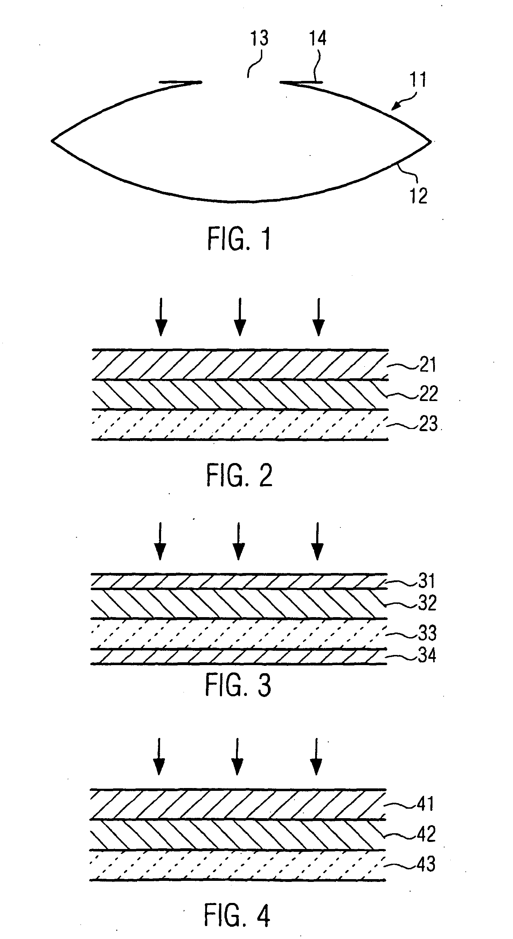

Fig. 1 illustriert schematisch die Querschnittsansicht eines Beispiels eines Staubsaugerfilterbeutels 11. Der Staubsaugerfilterbeutel 11 weist eine Beutelwandung 12 auf, die durch luftdurchlässiges Filtermaterial gebildet ist.

Während des Betriebs eines solchen Staubsaugerfilterbeutels strömt angesaugte Luft, die Staubpartikel, Bakterien, etc. mit sich führt, durch eine Eintrittsöffnung 13 in das Innere des Staubsaugerfilterbeutels 11. Ein Teil der eingesaugten Partikel, Bakterien, etc. verbleibt im Inneren des Beutels, während ein anderer Teil in die Beutelwandung 12 eindringt und dort in den Poren gehalten wird.

Im Bereich der Einlassöffnung 13 ist eine Halteplatte an der Beutelwandung befestigt. Die Halteplatte kann beispielsweise aus Pappe oder einem Kunststoff bestehen. Die Befestigung der Halteplatte an der Beutelwandung kann beispielsweise mittels eines Klebstoffs oder Ultraschallschweißens erfolgen.

Die Halteplatte 14 kann bereits antibakteriell ausgerüstet sein. Hierfür kann sie insbesondere einen Kunststoff umfassen, in den Chitosanpulver eingearbeitet ist. Die antibakterielle Wirkung wird durch die an der Oberfläche der Halteplatte befindlichen Chitosankörner erzielt.

In diesem Zusammenhang wird darauf hingewiesen, dass alternativ oder zusätzlich die Wandung des Staubsammelraums eines Staubsaugers, in dem ein derartiger Staubsaugerfilterbeutel angebracht wird, und/oder die Wandung eines zuführenden Staubsaugerrohrs einen Kunststoff beispielsweise mit Chitosanpulver umfassen kann.

Die Beutelwandung 12 des Staubsaugerfilterbeutels 11 besteht aus einer oder mehreren Filtermateriallagen, die zum Teil lose und zum Teil miteinander verbunden angeordnet sind. Die Verbindung der Filtermateriallagen kann, insbesondere je nach Art der Lage und des verwendeten Materials, beispielsweise über einen Klebstoff, z. B. Hotmelt, oder Ultraschallschweißen erfolgen.

Beispiele von möglichen Filterstrukturen zum Aufbau einer Beutelwandung 12 sind in den Fig. 2 bis 6 schematisch illustriert. Die Luftströmungsrichtung (aus dem Beutelinneren nach außen) ist dabei mit Pfeilen angedeutet.

Fig. 2 zeigt eine dreilagige Struktur, wobei die am weitesten stromaufwärts angeordnete Lage 21 eine nassgelegte Vliesstofflage ist. Diese nassgelegte Vliesstofflage umfasst Bambusstapelfasern, die aus Bambuszellstoff hergestellt worden sind. Diese nassgelegte Lage kann bis zu 100 Gew.-% Bambusstapelfasern umfassen. Um jedoch das Porenvolumen und die Staubspeicherfähigkeit zu erhöhen, umfasst die nassgelegte Lage vorzugsweise bis zu 40 Gew.-% Chemiefasern, beispielsweise Polyester-Stapelfasern.

Die nassgelegte Vliesstofflage kann ein Flächengewicht von 20 bis 200 g/m², vorzugsweise 50 bis 100 g/m² aufweisen. Die Luftdurchlässigkeit der nassgelegten Vliesstofflage kann zwischen 500 und 8000 l/(m² s), vorzugsweise 2000 bis 4000 l/(m² s) aufweisen.

Aufgrund der Bambusstapelfasern weist diese nassgelegte Lage antibakterielle, insbesondere bakteriostatische und bakterizide Eigenschaften, auf. Die Bambusstapelfasern wirken dabei insbesondere auf Keime, die auf der Vliesstofflage aufliegen oder in diese eingedrungen sind und darin eingelagert werden. Statt der Bambusstapelfasern können beispielsweise auch Bambuszellstofffasern verwendet werden.

Die nachfolgende Lage 22 ist eine Meltblown-Vliesstofflage. Diese Meltblownlage kann insbesondere aus Polypropylen-Endlosfasern hergestellt sein. Die Meltblownlage kann derart ausgebildet sein, dass ihre Filtereigenschaften einem so genannten Filtration-Grade-Meltblown, wie es in der EP 0 960 645 beschrieben wird, entsprechen. Diese Vliesstofflage übernimmt somit die Funktion einer Feinfilterlage.

Abströmseitig ist eine Spunbondlage 23 vorgesehen, die insbesondere als Stützvlies für den Filteraufbau fungiert. Die Spunbondlage kann insbesondere derart ausgebildet sein, dass sie einer so genannten Mikrodenier-Spunbond-Vliesstofflage gemäß der EP 0 960 645 entspricht.

In Fig. 3 ist ein nicht erfindungsgemäßer vierlagiger Aufbau gezeigt, bei dem die beiden äußeren Lagen 31 und 34 in Form von Spunbondlagen ausgebildet sind. Auch diese beiden Lagen können insbesondere einer Mikrodenier-Spunbond-Vliesstofflage gemäß der EP 0 960 645 entsprechen. Die Lagen 31 und 34 müssen jedoch nicht identisch sein.

Als in Luftströmungsrichtung zweite Lage folgt eine Meltblown-Vliesstofflage 32. Diese Meltblownlage kann grundsätzlich derart ausgebildet sein, dass sie einem so genannten High-Bulk-Meltblown gemäß der EP 0 960 645 entspricht. Im vorliegenden Fall sind die Meltblownfasern jedoch mit Chitosan beschichtet. Dies wurde dadurch erreicht, dass bei der Meltblownherstellung, das Abschrecken des extrudierten Polymers mit Wassernebel ("water quenching") mit Wasser durchgeführt wurde, dem Chitosan in wasserlöslicher Form zugesetzt worden war. Das Chitosan ist dann an die Meltblownfilamente gebunden und erzielt somit die antibakterielle Wirkung in dieser Vliesstofflage.

Die in Strömungsrichtung vorletzte Lage ist wiederum eine Meltblown-Vliesstofflage 33, die jedoch als Feinfilterlage wie die Lage 22 in Fig. 2 ausgebildet ist. Auch die Filamente der Lage 33 können analog zu denen der Lage 32 mit Chitosan beschichtet sein.

In Fig. 4 ist die Innenlage 41 als trockengelegte Vliesstofflage ausgebildet. Diese Vliesstofflage kann insbesondere kardiert oder luftgelegt sein. Als Stapelfasern werden Bambuszellstofffasern, Bambusstapelfasern und/oder Chitosanfasem verwendet. Diese trockengelegte Vliesstofflage kann insbesondere derart ausgebildet sein, dass ihre Filtrationseigenschaften denen eines trockengelegten Hochkapazitätspapiers gemäß der EP 0 960 645 entsprechen, wobei die Naturfasern in dem vorliegenden Fall durch die Bambusfasem und/oder die Chitosanfasem gebildet werden. Ein Verfestigen dieser Vliesstofflage kann beispielsweise mit Hilfe eines Latexbindemittels oder auf thermische Weise unter Verwendung von Bindefasern erfolgen. In diesem Zusammenhang wird darauf hingewiesen, dass ein "Hochkapazitätspapier" der EP 0 960 645 ein Vliesstoff im Sinne der anfangs genannten Definition und kein herkömmliches Papier ist.

Der Lage 41 folgt in Strömungsrichtung eine Meltblown-Vliesstofflage 42, die beispielsweise der Feinfilterlage 33 aus Fig. 3 entsprechen kann.

Die äußerste Lage 43 ist eine nassgelegte Filterpapierlage, also keine Vliesstofflage. Diese Filterpapierlage erfüllt im Wesentlichen die Funktion einer Stützlage. Sie kann beispielsweise ein Flächengewicht von 50 g/m² und eine Luftdurchlässigkeit von 200 bis 500 l(m²S) aufweisen. Sie hat typischerweise einen Anteil an zellulosischen Fasern von mehr als 90 %. Die zellulosischen Fasern können Zellstofffasern oder Stapelfasern sein, deren Ursprung beispielsweise Nadelholz oder auch, falls eine antibakterielle Wirkung erzielt werden soll, Bambus ist.

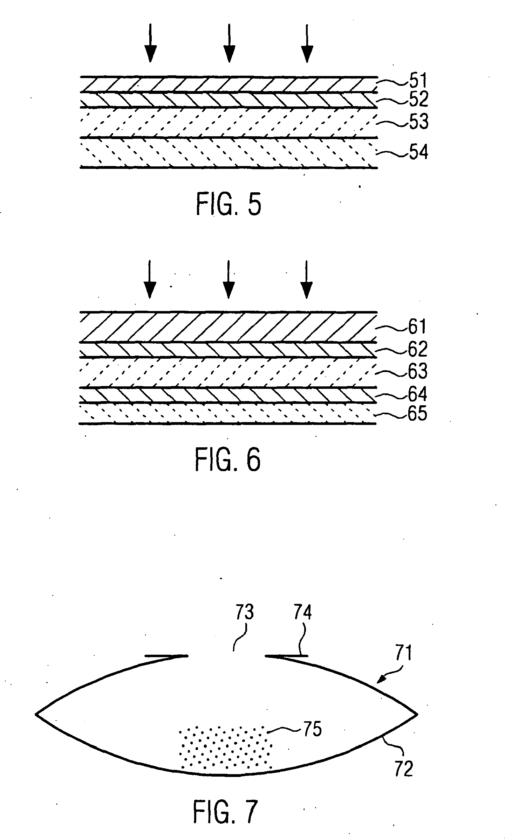

Fig. 5 zeigt ebenfalls ein Beispiel einer Filterstruktur. Die innerste Lage 51 ist eine Spunbond-Vliesstofflage, die insbesondere der Lage 23 aus Fig. 2 entsprechen kann. Die äußerste Lage 54 ist, wie in Fig. 4, ein nassgelegtes Filterpapier.

Vor dem Filterpapier 54 kommt eine Meltblown-Vliesstofflage 53. Bei der Herstellung eines derartigen Staubsaugerfilterbeutels werden auf die Meltblownlage 53 lose Fasern aufgebracht, durch die nach Fertigstellung der Beutelwandung eine Schicht 52 gebildet wird. Bei diesen losen Fasern kann es sich insbesondere um Chitosan-, Bambuszellstoff und/oder Bambusstapelfasern handeln.

Nach dem Aufbringen der Spunbondlage 51 werden die Filtermateriallagen mittels Ultraschallschweißen miteinander verbunden. Alternativ kann auch vor dem Aufbringen der Spunbondauflage 51 ein Hotmelt auf die losen Fasern gesprüht werden, so dass dann ein Verkleben der Fasern mit der Meltblownlage 53 und der Spunbondlage 51 erfolgt.

Ein weiteres Beispiel ist schematisch in Fig. 6 illustriert. Hier wird die Anströmseite der Beutelwandung durch eine trockengelegte Vliesstofflage 61 gebildet, die der Lage 41 aus Fig. 4 entspricht. Dieser trockengelegten Lage 61 folgt eine Lage aus elektrostatisch gesponnen Chitosanendlosfasern, wie beispielsweise in D. Vu, Electrospinning of Oriented and Non-oriented Ultrafine Fibers of Biopolymers, Dissertation, University of Nebraska - Lincoln, 2005 beschrieben.

Nach der Chitosanlage 62 folgt eine Meltblownlage 63, die in Form einer Feinfilterlage entsprechend der Lage 42 ausgebildet ist. Nach der Feinfilterlage 63 folgt wiederum eine elektrostatisch gesponnene Chitosanlage, die entsprechend der Lage 62 hergestellt sein kann, mit dieser aber nicht identisch sein muss.

Abströmseitig ist eine Spunbondlage 65 vorgesehen, die wiederum in erster Linie die Funktion einer Stützlage aufweist.

Bei den in den Fig. 2 bis 6 gezeigten Beispielen sind jedoch weitere Modifikationen möglich. So können die verschiedenen Filtermateriallagen auch in anderer Form miteinander kombiniert werden, zusätzliche Lagen können hinzugefügt und einzelne Lagen können auch weggelassen werden. Weiterhin lassen sich auch die genannten Materialien in anderer Form miteinander kombinieren bzw. durch weitere Materialien ersetzen.

Auch wenn im Zusammenhang mit den einzelnen Lagen in Fig. 2 - 6 insbesondere auf die EP 0 960 645 verwiesen wurde, so ist dies nur beispielhaft zu verstehen. Die jeweiligen Vliesstofflagen und/oder Filterpapierlagen können auch auf andere Weise hergestellt und andere Filtereigenschaften aufweisen.

In Fig. 7 ist eine schematische Querschnittsansicht eines Staubsaugerfilterbeutels 71 gezeigt, der eine Beutelwandung 72 aufweist, in der eine Eintrittsöffnung 73 vorgesehen ist. Im Bereich der Eintrittsöffnung 73 ist eine Halteplatte 74 angebracht, die entsprechend der Halteplatte 14 in Fig. 1 ausgebildet sein kann.

Die Beutelwandung 72 kann einen der in den Fig. 2 bis 6 illustrierten Aufbau aufweisen. Alternativ kann die Beutelwandung in dem in Fig. 7 gezeigten Beispiel jedoch auch aus anderen Filtermateriallagen und einer anderen Zahl von Filtermateriallagen aufgebaut sein. Insbesondere muss hier keine der Filtermateriallagen ein antibakteriell wirkendes Biopolymer aufweisen.

Dafür sind in dem in Fig. 7 gezeigten Beispiel lose antibakterielle Fasern 75 im Inneren des Staubsaugerfilterbeutels vorgesehen. Dabei kann es sich beispielsweise um Chitosan-, Bambuszellstoff- und/oder Bambusstapelfasern handeln. Diese Stapelfasern können frei beweglich in den Staubsaugertlterbeutel 71 eingebracht sein. Alternative können auch ein antibakterielles Pulver, beispielsweise gemahlener Bambuszellstoff, oder mit Chitosan- oder Bambuszellstoffpulver beschichtete Spaltfasern ("split fibers") vorgesehen sein.

Alternativ können die antibakteriellen Fasern oder das antibakterielle Pulver auch zunächst in einer Umhüllung vorliegen, die im Betrieb des Staubsaugerfilterbeutels bei einem vorherbestimmten Volumenstrom zerstört wird, so dass die Fasern bzw. das Pulver freigesetzt werden. Eine entsprechende Ausbildung der Umhüllung ist beispielsweise in der WO 2005/060807 beschrieben.

## Patentansprüche

1. Staubsaugerfilterbeutel (11) mit einer Beutelwandung (12) aus Filtermaterial, wobei (a) in der Beutelwandung und/oder (b) im Innern des Staubsaugerfilterbeutels Fasern aus einem Biopolymer mit antibakterieller Wirkung vorgesehen sind,
wobei die antibakteriellen Fasern in Form von Bambuszellstofffasern, Bambusstapelfasern und/oder Chitosanfasern ausgebildet sind,
und wobei im Fall (a) die Beutelwandung wenigstens eine Vliesstofflage aufweist, welche die antibakteriellen Fasern umfasst, und/oder die Beutelwandung wenigstens zwei Vliesstofflagen umfasst, zwischen denen die antibakteriellen Fasern angeordnet sind,
wobei die eine und/oder zwei Vliesstofflagen eine trockengelegte Vliesstofflage, eine nassgelegte Vliesstofflage oder eine Extrusionsvliesstofflage sind.

2. Staubsaugerfilterbeutel nach Anspruch 1, wobei das Biopolymer Chitosan und/oder Zellulose aus Bambus ist.

3. Staubsaugerfilterbeutel nach einem der vorangegangenen Ansprüche, wobei in der Beutelwandung und/oder im Innern des Staubsaugerfilterbeutels ein aus einem Biopolymer hergestelltes Pulver mit antibakterieller und/oder fungizider Wirkung vorgesehen ist.

4. Staubsaugerfilterbeutel nach Anspruch 3, wobei das Pulver mit antibakterieller und/oder fungizider Wirkung Bambuszellstoffpulver und/oder Chitosanpulver ist.

5. Staubsaugerfilterbeutel nach Anspruch 3 oder 4, wobei das Pulver mit antibakterieller und/oder fungizider Wirkung das Biopolymer mit einem Anteil von wenigstens 5 Gew.-%, insbesondere wenigstens 10 Gew.-%, insbesondere wenigstens 20 Gew.-%, aufweisen.

6. Staubsaugerfilterbeutel nach einem der Ansprüche 3 bis 5, wobei das antibakterielle Pulver an Fasern gebunden ist.

7. Staubsaugerfilterbeutel nach Anspruch 6, wobei die Fasern Natur- und/oder Chemiefasern sind.

8. Staubsaugerfilterbeutel nach Anspruch 6 oder 7, wobei das antibakterielle Pulver elektrostatisch an den Fasern gebunden ist.

9. Staubsaugerfilterbeutel nach einem der vorangegangenen Ansprüche, wobei die wenigstens eine Filtermateriallage die antibakteriellen Fasern in mehr als 5 Gew.-%, insbesondere mehr als 10 Gew.-%, insbesondere mehr als 20 Gew.-%, umfasst.

10. Staubsaugerfilterbeutel nach einem der vorangegangenen Ansprüche, wobei die wenigstens eine Filtermateriallage in Luftströmungsrichtung am weitesten stromaufwärts, am weitesten stromabwärts oder zwischen zwei weiteren Filtermateriallagen angeordnet ist.

11. Staubsaugerfilterbeutel nach einem der vorangegangenen Ansprüche, wobei die wenigstens eine Filtermateriallage und/oder wenigstens eine der zwei weiteren Filtermateriallagen stromabwärts, insbesondere unmittelbar stromabwärts, einer Filterpapierlage, einer trockengelegten Vliesstofflage, insbesondere einer kardierten oder luftgelegten Vliesstofflage, einer nassgelegten Vliesstofflage oder einer Extrusionsvliesstofflage, insbesondere einer Meltblownlage, einer Spunbondlage oder einer elektrostatisch gesponnenen Vliesstofflage, angeordnet sind.

12. Staubsaugerfilterbeutel nach einem der vorangegangenen Ansprüche, wobei die wenigstens eine Filtermateriallage thermisch, mechanisch und/oder chemisch verfestigt ist.

13. Staubsaugerfilterbeutel nach einem der vorangegangenen Ansprüche, wobei die wenigstens eine Filtermateriallage die Fläche der Beutelwandung nur teilweise oder vollständig überdeckt.

14. Staubsaugerfilterbeutel nach einem der vorangegangenen Ansprüche, wobei die antibakteriellen Fasern das Biopolymer mit einem Anteil von wenigstens 5 Gew.-%, insbesondere wenigstens 10 Gew.-%, insbesondere wenigstens 20 Gew.-%, aufweisen.

15. Staubsaugerfilterbeutel nach einem der vorangegangenen Ansprüche, wobei die antibakteriellen Fasern in Form von Zellstofffasern oder Endlosfasern ausgebildet sind.

16. Staubsaugerfilterbeutel nach einem der Ansprüche 1 - 14, wobei die antibakteriellen Fasern in Form von Stapelfasern ausgebildet sind.

17. Staubsaugerfilterbeutel nach Anspruch 16, wobei die Stapelfasern einen Titer von 1 bis 10 dtex, insbesondere 1 bis 6 dtex, und/oder eine mittleren Faserlänge von 20 bis 200 mm, insbesondere 30 bis 80 mm, aufweisen.

18. Staubsaugerfilterbeutel nach einem der vorangegangenen Ansprüche, mit einer ein Biopolymer umfassenden Halteplatte (14) mit antibakterieller Wirkung.

19. Staubsaugerfilterbeutel nach Anspruch 18, wobei das Biopolymer in die Halteplatte eingearbeitet und/oder an der Oberfläche gebunden ist.

20. Staubsaugerfilterbeutel nach Anspruch 18 oder 19, wobei die Halteplatte einen Kunststoff umfasst.

## Claims

1. A vacuum cleaner filter bag (11) with a bag wall (12) made of a filter material, comprising fibres of a biopolymer with an antibacterial effect (a) in the bag wall and/or (b) in the interior of the vacuum cleaner filter bag,
wherein the antibacterial fibres are selected from a group comprising bamboo pulp fibres, bamboo staple fibres and chitosan fibres and combinations thereof,
and wherein in the case (a) the bag wall has at least one nonwoven layer that comprises the antibacterial fibres and/or wherein the bag wall comprises at least two nonwoven layers between which the antibacterial fibres are arranged,
wherein the one and/or the two nonwoven layers is a drylaid nonwoven layer, a wetlaid nonwoven layer or an extrusion nonwoven layer.

2. Vacuum cleaner filter bag according to claim 1, wherein the biopolymer is chitosan and/or cellulose made from bamboo.

3. Vacuum cleaner filter bag according to one of the preceding claims, comprising a powder produced from a biopolymer and having an antibacterial and/or fungicidal effect in the bag wall and/or in the interior of the vacuum cleaner filter bag.

4. Vacuum cleaner filter bag according to claim 3, wherein the powder having an antibacterial and/or fungicidal effect is bamboo pulp powder or chitosan powder or bamboo pulp powder and chitosan powder

5. Vacuum cleaner filter bag according to claim 3 or 4, wherein the powder having an antibacterial and/or fungicidal effect shows the biopolymer with a proportion of at least 5 wt. %, particularly at least 10 wt. %, particularly at least 20 wt. %.

6. Vacuum cleaner filter bag according to one of the claims 3 - 5, wherein the antibacterial powder is bound to fibres.

7. Vacuum cleaner filter bag according to claim 6, wherein the fibres are natural fibres and/or chemical fibres.

8. Vacuum cleaner filter bag according to claim 6 or 7, wherein the antibacterial powder is electrostatically bound to the fibres.

9. Vacuum cleaner filter bag according to one of the preceding claims, wherein the at least one filter material layer comprises the antibacterial fibres in more than 5 wt. %, in particular more than 10 wt. %, in particular more than 20 wt. %.

10. Vacuum cleaner filter bag according to one of the preceding claims, wherein the at least one filter material layer is arranged in the air flow direction at the most upstream point, at the most downstream point, or between two additional filter material layers.

11. Vacuum cleaner filter bag according to one of the preceding claims, wherein the at least one filter material layer and/or at least one of the two additional filter material layers is arranged downstream, particularly immediately downstream, of a filter paper layer, a drylaid nonwoven layer, particularly a carded or airlaid nonwoven layer, a wetlaid nonwoven layer or an extrusion nonwoven layer, particularly a meltblown layer, a spunbond layer or an electrospun nonwoven layer.

12. Vacuum cleaner filter bag according to one of the preceding claims, wherein the at least one filter material layer is compacted thermally, mechanically and/or chemically.

13. Vacuum cleaner filter bag according to one of the preceding claims, wherein the at least one filter material layer covers the surface of the bag wall either only partially or completely.

14. Vacuum cleaner filter bag according to one of the preceding claims, wherein the antibacterial fibres show the biopolymer with a proportion of at least 5 wt. %, particularly at least 10 wt. %, particularly at least 20 wt. %.

15. Vacuum cleaner filter bag according to one of the preceding claims, wherein the antibacterial fibres are selected from a group comprising cellulose fibres and endless fibres.

16. Vacuum cleaner filter bag according to one of the claims 1 - 14, wherein the antibacterial fibres are formed as staple fibres.

17. Vacuum cleaner filter bag according to claim 16, wherein the staple fibres have a count of 1-10 dtex, particularly 1-6 dtex, or an average fibre length of 20 to 200 mm, particularly 30 to 80 mm, or both a count of 1-10 dtex, particularly 1-6 dtex and an average fibre length of 20 to 200 mm, particularly 30 to 80 mm.

18. Vacuum cleaner filter bag according to one of the preceding claims with a securing plate (14) comprising a biopolymer and having an antibacterial effect.

19. Vacuum cleaner filter bag according to claim 18, wherein the biopolymer is incorporated into the securing plate and/or bound to the surface.

20. Vacuum cleaner filter bag according to claim 18 or 19, wherein the securing plate comprises a plastic.

## Revendications

1. Sac filtrant d'aspirateur (11) à paroi de sac (12) en matériau filtrant, dans lequel des fibres en matériau biopolymère à action antibactérienne sont pourvues (a) dans la paroi du sac et/ou (b) à l'intérieur du sac filtrant d'aspirateur,
dans lequel les fibres antibactériennes sont constituées de fibres de cellulose de bambou, de fibres discontinues de bambou, et/ou de fibres de chitosane
et dans lequel, dans le cas (a), la paroi du sac comporte au moins une couche de textile non tissé comprenant les fibres antibactériennes, et/ou la paroi du sac comporte au moins deux couches de textile non tissé entre lesquelles sont agencées les fibres antibactériennes,
dans lequel la couche et/ou les deux couches de textile non tissé sont posées à sec, posées par voie humide, ou extrudées.

2. Sac filtrant d'aspirateur selon la revendication 1, dans lequel le biopolymère est de chitosane et/ou de cellulose de bambou.

3. Sac filtrant d'aspirateur selon l'une des revendications précédentes, dans lequel une poudre de biopolymère à action antibactérienne et/ou fongicide est pourvue dans la paroi du sac et/ou à l'intérieur du sac filtrant d'aspirateur.

4. Sac filtrant d'aspirateur selon la revendication 3, dans lequel la poudre à action antibactérienne et/ou fongicide est une poudre de cellulose de bambou et/ou de chitosane.

5. Sac filtrant d'aspirateur selon la revendication 3 ou 4, dans lequel la poudre à action antibactérienne et/ou fongicide comporte un biopolymère dans une proportion d'au moins 5% poids, en particulier d'au moins 10% poids, et plus en particulier encore d'au moins 20% poids.

6. Sac filtrant d'aspirateur selon l'une des revendications 3 à 5, dans lequel la poudre antibactérienne est fixée à des fibres.

7. Sac filtrant d'aspirateur selon la revendication 6, dans lequel les fibres sont des fibres naturelles et/ou synthétiques.

8. Sac filtrant d'aspirateur selon la revendication 6 ou 7, dans lequel la poudre antibactérienne est fixée aux fibres de manière électrostatique.

9. Sac filtrant d'aspirateur selon l'une des revendications précédentes, dans lequel l'au moins une couche de matériau filtrant comporte une proportion de fibres antibactériennes supérieure à 5% poids, en particulier supérieure à 10% poids, et plus en particulier encore supérieure à 20% poids.

10. Sac filtrant d'aspirateur selon l'une des revendications précédentes, dans lequel l'au moins une couche de matériau filtrant est agencée dans le sens du flux d'air le plus possible en amont, le plus possible en aval, ou entre deux couches de matériau filtrant additionnelles.

11. Sac filtrant d'aspirateur selon l'une des revendications précédentes, dans lequel l'au moins une couche de matériau filtrant et/ou l'au moins une des deux couches de matériau filtrant additionnelles comporte(nt) en aval, en particulier directement en aval, une couche de papier filtrant, une couche de non-tissé posé à sec, en particulier une couche de non-tissé cardé ou déposé par voie aéraulique, une couche de non-tissé déposé par voie humide ou une couche de non-tissé produit par extrusion, en particulier une couche de non-tissé obtenu par fusion-soufflage, une couche de non-tissé filé-lié, ou une couche de non-tissé filé selon un procédé électrostatique.

12. Sac filtrant d'aspirateur selon l'une des revendications précédentes, dans lequel l'au moins une couche de matériau filtrant est renforcée par voie thermique, mécanique et/ou chimique.

13. Sac filtrant d'aspirateur selon l'une des revendications précédentes, dans lequel l'au moins une couche de matériau filtrant recouvre partiellement ou entièrement la surface de la paroi du sac.

14. Sac filtrant d'aspirateur selon l'une des revendications précédentes, dans lequel les fibres antibactériennes comportent le biopolymère dans une proportion d'au moins 5% poids, en particulier d'au moins 10% poids, et plus en particulier encore d'au moins 20% poids.

15. Sac filtrant d'aspirateur selon l'une des revendications précédentes, dans lequel les fibres antibactériennes sont constituées de fibres cellulosiques ou de fibres continues.

16. Sac filtrant d'aspirateur selon l'une des revendications 1 à 14, dans lequel les fibres antibactériennes sont constituées de fibres discontinues.

17. Sac filtrant d'aspirateur selon la revendication 16, dans lequel les fibres discontinues présentent une masse linéique de 1 à 10 dtex, en particulier de 1 à 6 dtex, et/ou une longueur de fibre moyenne de 20 à 200 mm, en particulier 30 à 80 mm.

18. Sac filtrant d'aspirateur selon l'une des revendications précédentes, comportant une plaque de fixation (14) à action antibactérienne contenant un biopolymère.

19. Sac filtrant d'aspirateur selon la revendication 18, dans lequel le biopolymère est intégré dans la plaque de fixation et/ou fixé à sa surface.

20. Sac filtrant d'aspirateur selon la revendication 18 ou 19, dans lequel la plaque de fixation comporte un matériau synthétique.
